# EUROPEAN PATENT APPLICATION

(11) **EP 2 683 208 A1**
(43) Date of publication of application: **08.01.2014**
(21) Application number: 12765640.3
(22) Date of filing: 02.02.2012
(51) Int. Cl.: H04W 72/12

(54) **RECONFIGURATION METHOD, RADIO NETWORK CONTROLLER AND TERMINAL**

(30) Priority: 25.03.2011 CN 201110074247
(71) Applicant: Huawei Technologies Co., Ltd., Shenzhen, Guangdong 518129 (CN)
(72) Inventor: CHEN, Yanyan, Shenzhen Guangdong 518129 (CN); YU, Yang, Shenzhen Guangdong 518129 (CN)
(74) Representative: Epping - Hermann - Fischer
(86) International application number: PCT/CN2012/070850
(87) International publication number: WO 2012/129983

(57) **Abstract**

The embodiments of the present invention provide a reconfiguration method, a radio network controller (RNC) and a terminal. The method comprises: receiving a measurement report message triggered based on state transition and sent from a terminal, the measurement report message carrying indication information for triggering radio resource control (RRC) state transition; and sending a reconfiguration message to the terminal, the reconfiguration message comprising: a target state of the RRC state transition designated for the terminal, and/or corresponding radio bearer information and/or transport channel information and/or physical channel information when the terminal is in the RRC target state. The reconfiguration method, the RNC and the terminal provided in the embodiments of the present invention enable the RNC to acquire, as early as possible, service information to which the uplink data to be initiated by the terminal belongs, thereby reducing the delay introduced in the configuration of dedicated transport channel, and improving the efficiency of state transition performed by the RNC on the terminal.

## Description

This application claims priority to Chinese Patent Application No. 201110074247.4 entitled as "reconfiguration method, RNC and terminal" and filed to the State Intellectual Property Office of the PRC on March 25, 2011, which is hereby incorporated by reference in its entirety.

### TECHNICAL FIELD

This invention relate to the field of communication technologies, and particularly, to a reconfiguration method, an RNC and a terminal.

### BACKGROUND

If there is no continuous data transport between a Radio Network Controller (RNC) at a network side and a terminal being in a connected state and having a Radio Resource Control (RRC) protocol with the RNC, the RNC may reserve a radio bearer allocated to the terminal on an air-interface while releasing a dedicated transport channel, e.g., transiting the terminal to a Cell Paging Channel (CELL_PCH) state, so as to effectively utilize the air-interface resource and save the electric energy of the terminal. Only after sending a measurement report which is specially defined based on state transition, can the terminal in the CELL_PCH state perform state transition to enter a Cell Forward Access Channel (CELL_FACH) state, and then continue the subsequent uplink or downlink data transport in the CELL_FACH state.

The measurement report message triggered based on state transition specifically means a measurement report message having a measurement identity 16 and an empty predefined measurement result, which shall be firstly sent from a CELL_PCH terminal to the RNC in the RACH transport channel when the terminal needs to trigger state transition to the CELL_FACH in order to receive uplink data or downlink data. After the terminal sends the measurement report triggered based on state transition, if the RNC does not initiate a reconfiguration process to perform state transition of the terminal, the RNC and the terminal both automatically deem that the state of the terminal is transited to the CELL_FACH.

Therefore, in the prior art, when delay-sensitive services trigger state transition of a terminal in the CELL_PCH state, the time for sending a message responding to the measurement report message based on state transition and the time for detecting the uplink service data of the terminal by the RNC will cause extra delay to be introduced in a reconfiguration process configured by the dedicated transport channel, thereby influencing the data transport efficiency of the terminal.

### SUMMARY

Multiple aspects of the present invention provide a reconfiguration method, an RNC and a terminal, to solve the problem that in the prior art, when delay- sensitive services trigger state transition of a terminal in the CELL_PCH state, the time for sending a message responding to the measurement report message based on state transition and the time for detecting the uplink service data of the terminal by the RNC will cause extra delay to be introduced in a reconfiguration process configured by the dedicated transport channel, thereby influencing the data transport efficiency of the terminal.

An aspect of the present invention provides a reconfiguration method, comprising: receiving a measurement report message triggered based on state transition and sent from a terminal, the measurement report message carrying indication information for triggering Radio Resource Control (RRC) state transition; and sending a reconfiguration message to the terminal, the reconfiguration message comprising: a target state of the RRC state transition designated for the terminal, and/or corresponding radio bearer information and/or transport channel information and/or physical channel information when the terminal is in the RRC target state.

Another aspect of the present invention further provides a reconfiguration method, comprising: sending a measurement report message triggered based on state transition to a Radio Network Controller (RNC), the measurement report message carrying indication information for triggering Radio Resource Control (RRC) state transition; and receiving a reconfiguration message sent from the RNC, the reconfiguration message comprising: a target state of the RRC state transition designated for a terminal; and/or corresponding radio bearer information and/or transport channel information and/or physical channel information when the terminal is in the RRC target state.

Another aspect of the present invention further provides a Radio Network Controller (RNC), comprising: a receiving module configured to receive a measurement report message triggered based on state transition and sent from a terminal, the measurement report message carrying indication information for triggering Radio Resource Control (RRC) state transition; and a reconfiguration module configured to send a reconfiguration message to the terminal, the reconfiguration message comprising: a target state of the RRC state transition designated for the terminal and/or corresponding radio bearer information and/or transport channel information and/or physical channel information when the terminal is in the RRC target state.

Another aspect of the present invention further provides a terminal, comprising: a sending module configured to send a measurement report message triggered based on state transition to a Radio Network Controller (RNC), the measurement report message carrying indication information for triggering Radio Resource Control (RRC) state transition; and a receiving module configured to receive a reconfiguration message sent from the RNC, the reconfiguration message comprising: a target state of the RRC state transition designated for the terminal, and/or corresponding radio bearer information and/or transport channel information and/or physical channel information when the terminal is in the RRC target state.

Through the reconfiguration method, the RNC and the terminal described as above, indication information for triggering the RRC state transition is carried in a measurement report message sent from a terminal to an RNC, so that the RNC designates a target state of RRC state transition for the terminal according to the state transition indication information; and/or, radio bearer information and/or transport channel information and/or physical channel information corresponding to the terminal in the RRC target state, which enables the RNC to acquire service information, to which the uplink data to be initiated by the terminal belongs, as early as possible, thereby reducing the delay introduced in the configuration of dedicated transport channel, and improving the efficiency of state transition performed by the RNC on the terminal.

### BRIEF DESCRIPTION OF DRAWINGS

In order to more clearly describe the technical solutions of the prior art or the embodiments of the present invention, the drawings to be used in the descriptions of the prior art or the embodiments are briefly introduced as follows. Obviously, the following drawings just illustrate some embodiments of the present invention, and a person skilled in the art can obtain other drawings from these drawings without paying any creative effort.
Fig. 1 is a flowchart of an embodiment of a reconfiguration method provided by the present invention;
Fig. 2 is a flowchart of another embodiment of a reconfiguration method provided by the present invention;
Fig. 3 is a flowchart of still another embodiment of a reconfiguration method provided by the present invention;
Fig. 4 is a flowchart of yet another embodiment of a reconfiguration method provided by the present invention;
Fig. 5 is a structure diagram of an embodiment of an RNC provided by the present invention;
Fig. 6 is a structure diagram of another embodiment of an RNC provided by the present invention; and
Fig. 7 is a structure diagram of a terminal provided by the present invention.

### DESCRIPTION OF EMBODIMENTS

In order that the object, technical solutions and advantages of the present invention are clearer, the technical solutions of the embodiments of the present invention will be clearly and completely described as follows with reference to the drawings of the embodiments of the present invention. Obviously, those described herein are just parts of the embodiments of the present invention rather than all the embodiments. Based on the embodiments of the present invention, any other embodiment obtained by a person skilled in the art without paying any creative effort shall fall within the protection scope of the present invention.

The technical solutions of the present invention can be applicable to various communication systems, such as GSM, Code Division Multiple Access (CDMA) system, Wideband Code Division Multiple Access Wireless (WCDMA), General Packet Radio Service (GPRS), Long Term Evolution (LTE), etc. In order for convenience and conciseness, the following embodiment is detailedly described by taking WCDMA as an example.

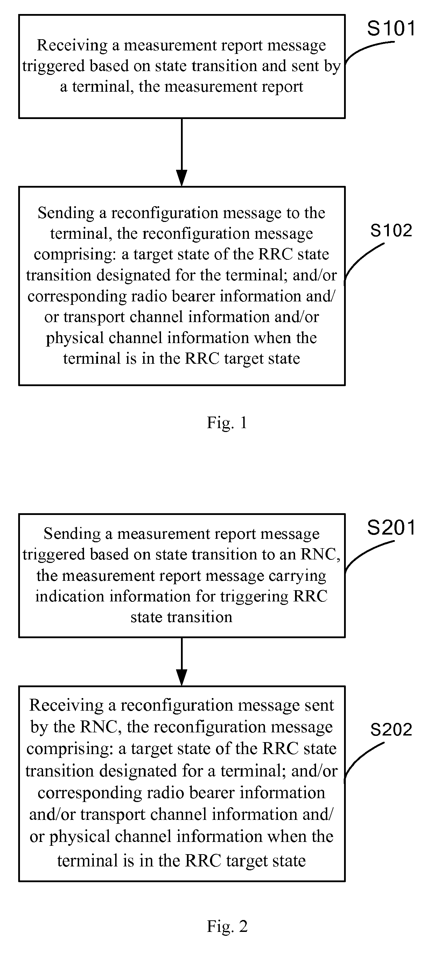

Fig. 1 is a flowchart of an embodiment of a reconfiguration method provided by the present invention. As illustrated in Fig. 1, the method includes:
S101: receiving a measurement report message triggered based on state transition and sent from a terminal, the measurement report message carrying indication information for triggering radio resource control (RRC) state transition; and
S102: sending a reconfiguration message to the terminal, the reconfiguration message comprising: a target state of the RRC state transition designated for the terminal, and/or corresponding radio bearer information and/or transport channel information and/or physical channel information when the terminal is in the RRC target state.

In this embodiment, the above steps are performed by the RNC.

In which, the measurement report message may be a measurement report message having a measurement identity 16 or other measurement identity, and specifically it is a measurement report that shall be firstly sent from a terminal in the CELL_PCH state to the RNC in an Random access channel (RACH) when the terminal needs to trigger state transition to the CELL_FACH state in order for uplink data transport. The indication information for triggering the RRC state transition carried in the measurement report means service type information which triggers the terminal to initiate a measurement report.

In the setup of air-interface (radio) bearers, the RNC may set up different Radio Bearers (RBs) for different services, thus different services may be distinguished through Radio Bearer Identities (RB IDs) (also referred to as air-interface bearer identities). Accordingly, the indication information for triggering the RRC state transition carried by the terminal in the measurement report may be represented by the RB ID, through which the service type information corresponding to the uplink RLC data currently triggering the measurement report message is indicated.

For example, the terminal may actively make a report, or the RNC may send control information in advance to indicate the terminal to report respective services corresponding to all data in an RLC cache of the terminal, or the services and data volume information thereof, when the currently triggered state transition is to be reported. For example, in a case where the terminal currently sets up more than one service with the RNC simultaneously, if one or more services in the RLC cache of the current terminal have uplink data to be sent, the state transition indication information carried by the terminal in the measurement report may be the data volume information of a service currently triggering state transition in the RLC cache. In which, the state transition indication information may be a service type (represented by RB ID) corresponding to the data in the current RLC cache, and the service type corresponding to the data in the current RLC cache and corresponding data volume situation may be reported simultaneously.

The state transition indication information (i.e., at least one RB ID and corresponding data volume information in the current RLC cache) reported by the terminal may be listed using the service data volume information, or represented in the form of bitmap, wherein the terminal may just report all RB IDs corresponding to the data in the current RLC cache, or simultaneously report the RB IDs and corresponding data volume information (e.g., the number of bytes or the number of bits).

The RNC may send control information in advance to indicate the terminal to carry, in the reported measurement report, the data volume information of a certain preset RB ID or a plurality of preset RB IDs in the RLC cache of the terminal. In this way, the RNC may acquire which ones of the set up RBs carry the data volume information of services or data sensitive to the data transport delay in the RLC cache of the terminal. Accordingly, the terminal may carry, in the submitted measurement report, the data volume situation of one or more RBs preset by the RNC in the RLC cache of the terminal, using the service data volume information in the form of list or bitmap.

As another feasible embodiment, the state transition indication information carried in the measurement report message may also be a cause currently triggering the terminal to initiate the measurement report, and/or service type information currently to be initiated by the terminal. For example, the state transition indication information specifically may be one or more of the following information: the terminal needs to send call setup indication information in the uplink, or the terminal needs to send a paging response in the uplink to notify the RNC that the cause for triggering the measurement report based on state transition is that the terminal needs to set up a call, or the terminal needs to respond to a call. In addition, the state transition indication information may be indication information such as the terminal initiates a high priority signaling, the terminal initiates a low priority signaling, the terminal initiates a conversation call, the terminal initiates a stream service call, the terminal initiates an interaction type service, the terminal initiates a background service call, the terminal initiates a paging response, the terminal receives a stream service call, the terminal receives an interaction type service, the terminal receives a background service call, the terminal initiates an emergency call, the terminal initiates an MBMS reception, the terminal initiates an MBMS point-to-point bearer setup request, the terminal initiates a circuit switch domain connection setup, the terminal initiates a packet switch domain connection setup, the terminal initiates a speech call, or the terminal initiates a video call.

After acquiring the indication information for triggering the RRC state transition carried by the terminal in the measurement report, the RNC may determine appropriate radio resources required for the subsequent data transport by the terminal according to the indication information for triggering the RRC state transition. The RNC sends a reconfiguration message to configure for the terminal, radio channel parameters required for bearing the subsequent data transport, such as radio bearer parameter (radio bearer control RLC parameter, radio bearer identify, etc.), transport channel parameter (transport format set, transport channel type, transport channel identity, etc.) and physical channel parameter (channelization code, spreading code, signature, etc.). The reconfiguration message includes a target state of the RRC state transition designated for the terminal, and/or corresponding radio bearer information and/or transport channel information, and/or physical channel information of the terminal in RRC target state. In which, the reconfiguration message may be one or more of a radio bearer setup message, a radio bearer reconfiguration message, a transport channel setup message, a transport channel reconfiguration message, and a physical channel reconfiguration message.

In the reconfiguration method provided by the embodiment of the present invention, indication information for triggering the RRC state transition is carried in a measurement report message sent from a terminal to an RNC, so that the RNC designates a target state of RRC state transition for the terminal according to the state transition indication information; and/or, radio bearer information and/or transport channel information and/or physical channel information corresponding to the terminal in the RRC target state, which enables the RNC to acquire service information, to which the uplink data to be initiated by the terminal belongs, as early as possible, thereby reducing the delay introduced in the configuration of dedicated transport channel, and improving the efficiency of state transition performed by the RNC on the terminal.

Fig. 2 is a flowchart of another embodiment of a reconfiguration method provided by the present invention. As illustrated in Fig. 2, the method includes:
S201: sending a measurement report message triggered based on state transition to an RNC, the measurement report message carrying indication information for triggering RRC state transition; and
S202: receiving a reconfiguration message sent from the RNC, the reconfiguration message comprising: a target state of the RRC state transition designated for a terminal; and/or corresponding radio bearer information and/or transport channel information and/or physical channel information when the terminal is in the RRC target state.

In this embodiment, the above steps are performed by the terminal, which specifically is a terminal in CELL_PCH state. The measurement report message is a measurement report message having a measurement identity 16 or other measurement identity, which shall be firstly sent from the terminal to the RNC in the RACH when the terminal needs to trigger state transition to the CELL_FACH state in order for uplink data transport. The indication information for triggering the RRC state transition carried in the measurement report means service type information which triggers the terminal to initiate a measurement report.

The indication information for triggering the RRC state transition carried by the terminal in the measurement report may be represented by the RB ID, through which the service type information corresponding to the uplink RLC data currently triggering the measurement report message is indicated. For example, the terminal may actively make a report, or the RNC may send control information in advance to indicate the terminal to report respective services corresponding to all data in an RLC cache of the terminal, or the services and data volume information thereof, when the currently triggered state transition is to be reported. In which, the state transition indication information may be a service type (represented by RB ID) corresponding to the data in the current RLC cache, and the service type corresponding to the data in the current RLC cache and corresponding data volume situation may be reported simultaneously.

As another feasible embodiment, the state transition indication information carried in the measurement report message may also be a cause currently triggering the terminal to initiate the measurement report, and/or service type information currently to be initiated by the terminal. For example, the state transition indication information specifically may be one or more of the following information: the terminal needs to send call setup indication information in the uplink, or the terminal needs to send a paging response in the uplink to notify the RNC that the cause for triggering the measurement report based on state transition is that the terminal needs to set up a call, or the terminal needs to respond to a call. In addition, the state transition indication information may be indication information such as the terminal initiates a high priority signaling, the terminal initiates a low priority signaling, the terminal initiates a conversation call, the terminal initiates a stream service call, the terminal initiates an interaction type service, the terminal initiates a background service call, the terminal initiates a paging response, the terminal receives a stream service call, the terminal receives an interaction type service, the terminal receives a background service call, the terminal initiates an emergency call, the terminal initiates an MBMS reception, the terminal initiates an MBMS point-to-point bearer setup request, the terminal initiates a circuit switch domain connection setup, the terminal initiates a packet switch domain connection setup, the terminal initiates a speech call, or the terminal initiates a video call.

After acquiring the indication information for triggering the RRC state transition carried by the terminal in the measurement report, the RNC may determine appropriate radio resources required for the subsequent data transport by the terminal according to the indication information for triggering the RRC state transition. The RNC sends a reconfiguration message, which may be one or more of a radio bearer setup message, a radio bearer reconfiguration message, a transport channel setup message, a transport channel reconfiguration message, and a physical channel reconfiguration message.

In the reconfiguration method provided by the embodiment of the present invention, indication information for triggering the RRC state transition is carried in a measurement report message sent from a terminal to an RNC, so that the RNC designates a target state of RRC state transition for the terminal according to the state transition indication information; and/or, radio bearer information and/or transport channel information and/or physical channel information corresponding to the terminal in the RRC target state, which enables the RNC to acquire service information, to which the uplink data to be initiated by the terminal belongs, as early as possible, thereby reducing the delay introduced in the configuration of dedicated transport channel, and improving the efficiency of state transition performed by the RNC on the terminal.

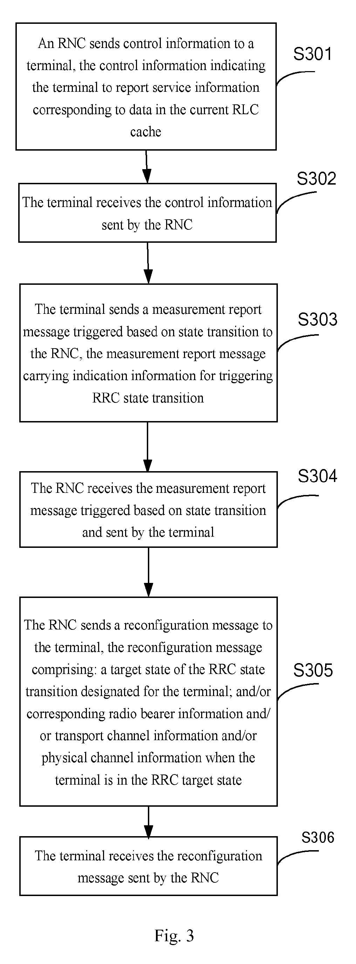

Fig. 3 is a flowchart of still another embodiment of a reconfiguration method provided by the present invention. As illustrated in Fig. 3, in this embodiment, the indication information for triggering the RRC state transition may be one or more RB IDs, or one or more RB IDs and data volume thereof. The RB ID is corresponding to at least one service to which data in the current RLC cache of the terminal belongs, and the data volume is a data volume of a service corresponding to the RB ID in the current RLC cache. The method specifically may be described as follows.
S301: an RNC sends control information to a terminal, the control information indicating the terminal to report service information corresponding to data in the current RLC cache; and
S302: the terminal receives the control information sent from the RNC.

The control information indicates that in a case where the terminal in CELL_PCH state initiates a measurement report message having a measurement identity 16, if the data currently triggering the terminal to initiate state transition belongs to one or more services (RB IDs) preset by the RNC, the terminal shall carry one or more service information in the measurement report message having the measurement identity 16.

In which, the service information, i.e., the state transition indication information, may be RB ID, or RB ID and data volume information (e.g., the number of bytes or the number of bits) pertaining thereto in the current RLC cache.

The control information may include one or more service identities (RB IDs) which indicate that in a case where the terminal triggers state transition because the RLC cache has data to be sent, if the terminal judges that the data in the current RLC cache belongs to one or more service identities in the control information, it carries, in the sent measurement report message having the measurement identity 16, the RB ID corresponding to the data in the RLC cache, or the RB ID and data volume thereof.

For example, the RNC sends to the terminal control information which indicates the terminal to report the composition of an RB list configured by the RNC and corresponding to the data in the current RLC cache. If the current RLC cache of the terminal has the data corresponding to the RB ID configured by the RNC, a report may be made in the measurement report message, otherwise the report may not be made. The terminal may just report RB ID information existing in the current RLC cache and corresponding to the RB list configured by the RNC, or report corresponding data volume to the RNC while reporting the RB ID. Specifically, the report may be made in the form of bitmap (e.g., when the RLC cache of the terminal has the data corresponding to the RB ID preset by the RNC, corresponding bit of the bitmap is set as 1, otherwise it is set as 0). When the RLC cache of the terminal has the data corresponding to the RB ID preset by the RNC, the state transition indication information carried by the terminal in the measurement report message may be TRUE, or a special indication for example indicating that data volume of the current RLC cache of the terminal has exceeded 4a measurement event threshold preset by the RNC.

Or, the control information sent from the RNC to the terminal may further indicates the terminal to report RB IDs corresponding to all services set up at the network side, or the RB IDs and data volume information thereof in the current RLC cache of the terminal.

The control information sent from the RNC to the terminal may indicate the terminal to report the situations of data volumes of all services set up with the network in the current RLC cache of the terminal, so that the RNC acquires the information of all the services. The terminal may report in the form of service information list or bitmap. The terminal may just report the RB ID, or simultaneously report corresponding data volume of the RB ID in the RLC cache to the RNC.

Or, the control information sent from the RNC to the terminal may also indicate the terminal to report data volume information of respective services (RB IDs) corresponding to all data in the current RLC cache of the terminal, when state transition is triggered.

The control information sent from the RNC to the terminal may indicate that in a case where the terminal currently setting up one or more services with the RNC initiates a measurement report of state transition, if one or more services in the RLC cache of the current terminal have uplink data to be sent, the state transition indication information carried by the terminal in the measurement report may be data volume information of the RB ID currently triggering state transition in the RLC cache. In which, the terminal may just report the RB ID corresponding to the data in the current RLC cache, or simultaneously report the RB ID corresponding to the data in the current RLC cache and corresponding data volume situation.

The control information sent from the RNC to the terminal specifically may be carried in a measurement control message, an RB setup message, an RB reconfiguration message, a transport channel setup message, a transport channel reconfiguration message, or a physical channel reconfiguration message. The RNC may send RB IDs corresponding to different services to the terminal through one or more of the above messages.
S303: the terminal sends a measurement report message triggered based on state transition to the RNC, the measurement report message carrying indication information for triggering RRC state transition.
S304: the RNC receives the measurement report message triggered based on state transition and sent from the terminal.

In which, the indication information for triggering the RRC state transition may be one or more RB IDs, or one or more RB IDs and data volume thereof. The RB ID is corresponding to at least one service to which data in the current RLC cache of the terminal belongs, and the data volume is a data volume of a service corresponding to the RB ID in the current RLC cache.

The state transition indication information may be in the form of bitmap (e.g., when the RLC cache of the terminal has the data corresponding to the RB ID preset by the RNC, corresponding bit of the bitmap is set as 1, otherwise it is set as 0); it also may be a Boolean value, e.g., TRUE indicates that data corresponding to the RB ID preset by the RNC exists in the RLC cache of the terminal; or a special indication may be used to indicate that the data in the RLC cache of the terminal is corresponding to a certain RB ID preset by the RNC, for example, to indicate that the data volume of the current RLC cache of the terminal has exceeded 4a measurement event threshold preset by the RNC.

To be noted, S301 is an optional step (correspondingly, S302 is also an optional step), i.e., the RNC may indicate or configure the content reported by the terminal in advance through the control information. In addition, the terminal may actively report the service to which the data in the current RLC cache belongs and corresponding data volume.
S305: the RNC sends a reconfiguration message to the terminal, the reconfiguration message comprising: a target state of the RRC state transition designated for the terminal, and/or corresponding radio bearer information and/or transport channel information and/or physical channel information when the terminal is in the RRC target state.
S306: the terminal receives the reconfiguration message sent from the RNC.

A specific example is given as follows: the current terminal sets up services A, B and C with the network, and services A and B are sensitive to delay. In that case, the RNC may indicate the terminal, through control information, to carry the RB ID of service A and/or service B in the measurement report message based on state transition, when uplink data to be sent from the terminal in CELL_PCH state belongs to service A and/or service B.

In which, the control information may include B#N (N is a certain designated RB ID predefined by the RNC), and the control information indicates the terminal to carry RB#N in a measurement report submitted by the terminal, when the measurement report is triggered because RB#N has uplink data to be sent. When the uplink data is actively initiated, the terminal may carry, in the MR, RB#N or an indicator (the indication may be "true", or existing 4a indicator which is corresponding to a false 4a event), so as to indicate that the sent uplink data includes service data corresponding to RB#N. In which, the RNC may indicate the terminal to carry RB#N only when the sum of data in the RLC cache meets 4a, or the terminal may also be configured to carry RB#N when a preset condition (e.g., 4a is not met) is satisfied.

The control information may further include RB#N and RB#M, or more RB IDs, thus when actively initiating uplink data, the terminal may carry a bitmap list having enumeration value in the measurement report message. Each bitmap list corresponds to one RB ID, and the order of the bitmap may be consistent with the configuration order at the network side. If the service corresponding to RB#N has uplink data to be transmitted, while the service corresponding to RB#M has no uplink data to be transmitted, the bitmap list carried in the measurement report message may be equal to "true" and "false". Similarly, the RNC may indicate the terminal to carry RB#N only when the sum of data in the RLC cache meets 4a, or the terminal may also be configured to carry RB#N when a preset condition (e.g., 4a is not met) is satisfied.

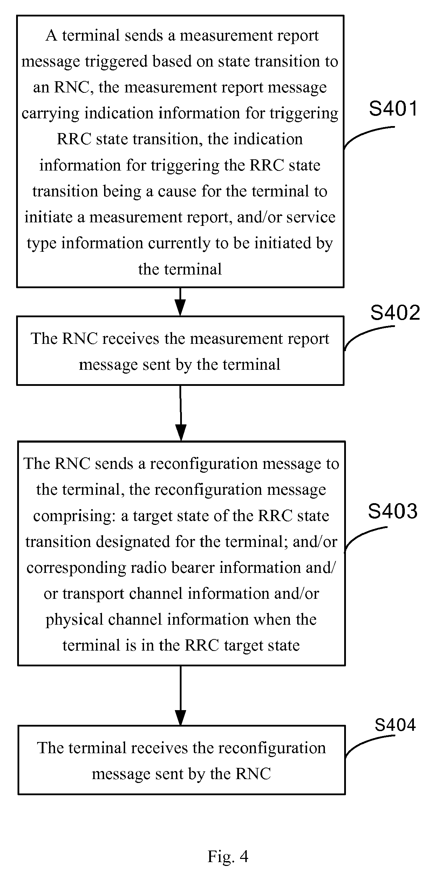

Fig. 4 is a flowchart of yet another embodiment of a reconfiguration method provided by the present invention. As illustrated in Fig. 4, in this embodiment, indication information for triggering RRC state transition carried in a measurement report message sent from the terminal to the RNC is a cause for triggering the terminal to initiate the measurement report, and/or service type information to be initiated by the terminal.

The method specifically may be described as follows.
S401: a terminal sends a measurement report message triggered based on state transition to an RNC, the measurement report message carrying indication information for triggering RRC state transition, the indication information for triggering the RRC state transition being a cause for the terminal to initiate a measurement report, and/or service type information currently to be initiated by the terminal.
S402: the RNC receives the measurement report message sent from the terminal.

In which, S401 specifically may receive a measurement report message having a measurement identity 16 sent from the terminal in CELL_PCH state, the measurement report message carrying a cause for the terminal to initiate a measurement report, and/or service type information currently to be initiated by the terminal.

The cause for the terminal to initiate the measurement report and/or the service type information currently to be initiated by the terminal may be one or combinations of: the terminal initiates a call, the terminal initiates a paging response, the terminal has uplink data borne in signaling radio bearer 1 (SRB#1) to be transmitted, the terminal receives downlink data (downlink data pertaining to the terminal is detected or received in HS-SCCH or HS-PDSCH), the terminal initiates a high priority signaling, the terminal initiates a low priority signaling, the terminal initiates a conversation call, the terminal initiates a stream service call, the terminal initiates an interaction type service, the terminal initiates a background service call, the terminal responds to a paging, the terminal receives a stream service call, the terminal receives an interaction type service, the terminal receives a background service call, the terminal initiates an emergency call, the terminal initiates an MBMS reception, the terminal initiates an MBMS point-to-point bearer setup request, the terminal initiates a circuit switch domain connection setup, the terminal initiates a packet switch domain connection setup, the terminal initiates a speech call, and the terminal initiates a video call.

The above contents are just several possible causes for the terminal to initiate the measurement report and/or the service type information currently to be initiated by the terminal provided in the embodiment of the present invention, but the present invention is not limited thereto.
S403: the RNC sends a reconfiguration message to the terminal, the reconfiguration message comprising: a target state of the RRC state transition designated for the terminal, and/or corresponding radio bearer information and/or transport channel information and/or physical channel information when the terminal is in the RRC target state.
S404: the terminal receives the reconfiguration message sent from the RNC.

In which, the reconfiguration message specifically may be one or more of an RB setup message, an RB reconfiguration message, a transport channel setup message, a transport channel reconfiguration message or a physical channel reconfiguration message.

Under this scenario, the RNC may acquire, from the indication information for triggering the RRC state transition carried in the measurement report message sent from the terminal, whether the current state transition of the terminal is triggered by downlink data reception or uplink data. The RNC sends a reconfiguration message to configure for the terminal, radio channel parameters required for bearing subsequent data transport, such as radio bearer parameter (radio bearer control RLC parameter, radio bearer identify, etc.), transport channel parameter (transport format set, transport channel type, transport channel identity, etc.) and physical channel parameter (channelization code, spreading code, signature, etc.), thereby designating a target state of the RRC state transition for the terminal in the reconfiguration process, and/or carrying corresponding radio bearer information and/or transport channel information, and/or physical channel information of the terminal in RRC target state.

A person skilled in the art will appreciate that all or a part of the flows of the methods in the above embodiments may be completed by instructing relevant hardware through a computer program which may be stored in a computer readable storage medium and may include the flows of the above method embodiments when being executed. In which, the storage medium may be magnetic disk, optical disk, Read-Only Memory (ROM), or Random Access Memory (RAM), etc.

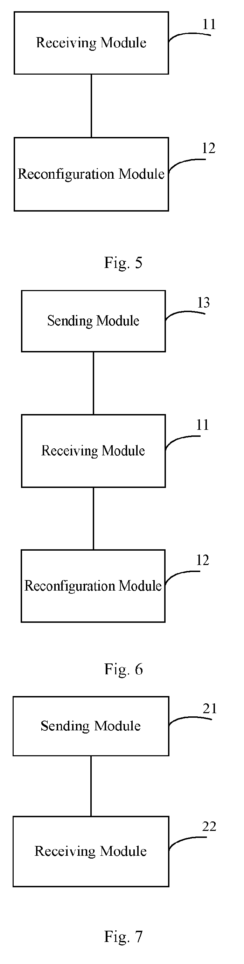

Fig. 5 is a structure diagram of an embodiment of an RNC provided by the present invention. As illustrated in Fig. 5, the RNC includes a receiving module 11 and a reconfiguration module 12.

The receiving module 11 is configured to receive a measurement report message triggered based on state transition and sent from a terminal, the measurement report message carrying indication information for triggering RRC state transition.

The reconfiguration module 12 is configured to send a reconfiguration message to the terminal, the reconfiguration message comprising: a target state of the RRC state transition designated for the terminal and/or corresponding radio bearer information and/or transport channel information and/or physical channel information when the terminal is in the RRC target state.

Fig. 6 is a structure diagram of another embodiment of an RNC provided by the present invention. As illustrated in Fig. 6, the receiving module 11 is specifically configured to receive a measurement report message having a measurement identity 16 sent from the terminal in CELL_PCH state.

As a feasible embodiment, the indication information for triggering the RRC state transition carried in the measurement report message received by the receiving module 11 is at least one RB ID, or at least one RB ID and a data volume thereof. The RB ID is corresponding to at least one service to which data in the current RLC cache of the terminal belongs, and the data volume is a data volume of a service corresponding to the RB ID in the current RLC cache.

Further, the RNC may include a sending module 13.

The sending module 13 is configured to send control information to the terminal, the control information indicating the terminal to report service information corresponding to the data in the current RLC cache.

The service information is an RB ID corresponding to at least one service to which the data in the current RLC cache of the terminal belongs, or the RB ID and a data volume of corresponding service in the current RLC cache.

Or, the service information is RB IDs corresponding to all services set up by the terminal at the network side, or the RB IDs and data volumes of corresponding services in the current RLC cache.

Or, the service information is at least one set RB ID, or the RB ID and a data volume of corresponding service in the current RLC cache.

In which, the at least one RB ID, or at least one RB ID and data volume thereof may be represented with a bitmap or an enumeration value.

In which, the control information sent from the sending module 13 may be carried in one or more of a measurement control message, an RB setup message, an RB reconfiguration message, a transport channel setup message, a transport channel reconfiguration message and a physical channel reconfiguration message.

The service type indication information received by the receiving module 11 is a cause for triggering the terminal to initiate a measurement report and/or service type information currently to be initiated by the terminal.

The indication information for triggering the RRC state transition carried in the measurement report message received by the receiving module 11 is one or more of the following information: the terminal initiates a call, the terminal initiates a paging response, the terminal has uplink data to be transmitted, the terminal receives downlink data, information indicating that the terminal initiates a high priority signaling, information indicating that the terminal initiates a low priority signaling, information indicating that the terminal initiates a conversation call, information indicating that the terminal initiates a stream service call, information indicating that the terminal initiates an interaction type service, information indicating that the terminal initiates an emergency call, information indicating that the terminal initiates an MBMS reception, the terminal initiates an MBMS point-to-point bearer setup request, information indicating that the terminal initiates a circuit switch domain connection setup, information indicating that the terminal initiates a packet switch domain connection setup, information indicating that the terminal initiates a speech call, and information indicating that the terminal initiates a video call.

The reconfiguration message sent from the reconfiguration module 12 may be one or more of an RB setup message, an RB reconfiguration message, a transport channel setup message, a transport channel reconfiguration message, and a physical channel reconfiguration message.

The RNC provided by the embodiment of the present invention is corresponding to the reconfiguration method provided by the embodiment of the present invention, and it is a functional device for performing the reconfiguration method. For the detailed process of performing the state transition method, please refer to the method embodiment, and herein is omitted.

The RNC provided by the embodiment of the present invention carries indication information for triggering the RRC state transition in a measurement report message sent from a terminal to the RNC, so that the RNC designates a target state of RRC state transition for the terminal according to the state transition indication information; and/or, radio bearer information and/or transport channel information and/or physical channel information corresponding to the terminal in the RRC target state, which enables the RNC to acquire service information, to which the uplink data to be initiated by the terminal belongs, as early as possible, thereby reducing the delay introduced in the configuration of dedicated transport channel, and improving the efficiency of state transition performed by the RNC on the terminal.

Fig. 7 is a structure diagram of a terminal provided by the present invention. As illustrated in Fig. 7, the terminal includes a sending module 21 and a receiving module 22.

The sending module 21 is configured to send a measurement report message triggered based on state transition to an RNC, the measurement report message carrying indication information for triggering RRC state transition.

The receiving module 22 is configured to receive a reconfiguration message sent from the RNC, the reconfiguration message comprising: a target state of the RRC state transition designated for the terminal, and/or corresponding radio bearer information and/or transport channel information and/or physical channel information when the terminal is in the RRC target state.

Further, the sending module 21 is specifically configured to send a measurement report message having a measurement identity 16 to the RNC.

The indication information for triggering the RRC state transition carried in the measurement report message sent from the sending module 21 to the RNC is at least one RB ID, or at least one RB ID and a data volume thereof.

The receiving module 22 may be further configured to receive control information sent from the RNC, the control information indicating the terminal to report service information corresponding to data in the current RLC cache.

The service information is an RB ID corresponding to at least one service to which the data in the current RLC cache of the terminal belongs, or the RB ID and a data volume of corresponding service in the current RLC cache.

Or, the service information is RB IDs corresponding to all services set up by the terminal at the network side, or the RB IDs and data volumes of corresponding services in the current RLC cache.

Or, the service information is at least one set RB ID, or the RB ID and a data volume of corresponding service in the current RLC cache.

The control information received by the receiving module 22 is carried in one or more of a measurement control message, an RB setup message, an RB reconfiguration message, a transport channel setup message, a transport channel reconfiguration message, and a physical channel reconfiguration message.

The indication information for triggering the RRC state transition carried in the measurement report message sent from the sending module 21 to the RNC is a cause for triggering the terminal to initiate the measurement report, and/or service type information currently to be initiated by the terminal.

The indication information for triggering the RRC state transition carried in the measurement report message sent from the sending module 21 to the RNC is one or more of the following information: the terminal initiates a call, the terminal initiates a paging response, the terminal has uplink data to be transmitted, information indicating that the terminal receives downlink data, information indicating that the terminal initiates a high priority signaling, information indicating that the terminal initiates a low priority signaling, information indicating that the terminal initiates a conversation call, information indicating that the terminal initiates a stream service call, information indicating that the terminal initiates an interaction type service, information indicating that the terminal initiates an emergency call, information indicating that the terminal initiates an MBMS reception, the terminal initiates an MBMS point-to-point bearer setup request, information indicating that the terminal initiates a circuit switch domain connection setup, information indicating that the terminal initiates a packet switch domain connection setup, information indicating that the terminal initiates a speech call, and information indicating that the terminal initiates a video call.

The terminal provided by the embodiment of the present invention is corresponding to the reconfiguration method provided by the embodiment of the present invention, and it is a functional device for performing the reconfiguration method. For the detailed process of performing the state transition method, please refer to the method embodiment, and herein is omitted.

The RNC provided by the embodiment of the present invention carries indication information for triggering RRC state transition in a measurement report message sent from a terminal to the RNC, so that the RNC designates a target state of RRC state transition for the terminal according to the state transition indication information; and/or, radio bearer information and/or transport channel information and/or physical channel information corresponding to the terminal in the RRC target state, which enables the RNC to acquire service information, to which the uplink data to be initiated by the terminal belongs, as early as possible, thereby reducing the delay introduced in the configuration of dedicated transport channel, and improving the efficiency of state transition performed by the RNC on the terminal.

A person skilled in the art will clearly understand that, in order for convenient and concise descriptions, the detailed working processes of the above system, device and units may refer to corresponding processes in the above method embodiments, which are not repeated herein.

In the embodiments provided by the present application, it shall be appreciated that the disclosed system, device and method may be implemented in other ways. For example, the above device embodiments are just exemplary. For example, the unit division is just a logical function division, and other division mode may be used in the implementation, e.g., multiple units or components may be combined or integrated into another system, or some features may be omitted or not executed. Another point is that the displayed or discussed mutual coupling, direct coupling or communication connection may be implemented through indirect coupling or communication connection between some interfaces, devices or units in electrical, mechanical or other forms.

The units described as separate parts may be or may not be physically separated, and the parts displayed as units may be or may not be physical units, i.e., they may be located at the same place or distributed to at least two network elements. The object of the solution of the embodiment may be achieved by selecting parts or all of units upon actual demand.

In addition, various functional units in the embodiments of the present invention may be integrated into one processing unit, or existed as individual physical units, or two or more units may be integrated into one unit. The integrated units may be implemented in the form of hardware or software functional units.

When the integrated units are implemented in the form of software functional units and sold or used as individual products, they may be stored in a computer readable access medium. Based on such understanding, the technical solution of the present invention substantively, a part thereof making a contribution to the prior art, or the whole or a part of the technical solution, may be reflected in the form of software product which is stored in a storage medium, including several instructions to enable a computer device (e.g., personal computer, server, network facility, etc.) to execute all or a part of the steps of the methods of the respective embodiments. The storage medium includes various mediums capable of storing the program codes, such as U-disc, mobile hard disc, Read-Only Memory (ROM), Random Access Memory (RAM), magnetic disc, optical disc, etc.

Finally to be noted, the above embodiments are just used to describe the technical solutions of the present invention, rather than making limitations thereto. Although the present invention is described in details with reference to the above embodiments, a person skilled in the art shall appreciate that the technical solutions of the above embodiments can be modified, or some technical features thereof can be equivalently substituted, while those modifications or substitutions do not cause the essences of corresponding technical solutions to deviate from the spirit and range of the technical solutions of the embodiments of the present invention.

## Claims

1. A reconfiguration method, **characterized in** comprising:
receiving a measurement report message triggered based on state transition and sent from a terminal, wherein the measurement report message carries indication information for triggering radio resource control (RRC) state transition; and
sending a reconfiguration message to the terminal, wherein the reconfiguration message comprises: a target state of the RRC state transition designated for the terminal, and/or corresponding radio bearer information and/or transport channel information and/or physical channel information when the terminal is in the RRC target state.

2. The method according to claim 1, **characterized in that** the receiving the measurement report message triggered based on the state transition and sent from the terminal specifically comprises:
receiving the measurement report message having a measurement identity 16 sent from the terminal in a cell paging channel (CELL_PCH) state.

3. The method according to claim 1 or 2, **characterized in that** the indication information for triggering the RRC state transition comprises at least one radio bearer identity (RB ID), or comprises at least one radio bearer identity (RB ID) and data volume information.

4. The method according to claim 3, **characterized in that** before the receiving the measurement report message triggered based on the state transition and sent from the terminal, the method further comprises:
sending control information to the terminal, wherein the control information indicates the terminal to report service information corresponding to data in the current RLC cache.

5. The method according to claim 4, **characterized in that** the service information comprises an RB ID corresponding to at least one service to which the data in the current RLC cache of the terminal belongs, or comprises an RB ID and a data volume of corresponding service in the current RLC cache;
or, the service information comprises RB IDs corresponding to all services set up by the terminal at a network side, or comprises RB IDs and data volumes of corresponding services in the current RLC cache;
or, the service information comprises at least one set RB ID, or comprises an RB ID and a data volume of corresponding service in the current RLC cache.

6. The method according to claim 5, **characterized in that** the at least one RB ID, or the at least one RB ID and the data volume thereof, are represented with bitmap or enumeration value.

7. The method according to claim 4 or 5, **characterized in that** the control information is carried in one or more of a measurement control message, an RB setup message, an RB reconfiguration message, a transport channel setup message, a transport channel reconfiguration message and a physical channel reconfiguration message.

8. The method according to claim 1 or 2, **characterized in that** the indication information for triggering the RRC state transition comprises a cause for triggering the terminal to initiate a measurement report and/or service type information currently to be initiated by the terminal.

9. The method according to claim 8, **characterized in that** the indication information for triggering RRC state transition comprises one or more of the following information: the terminal initiates a call, the terminal initiates a paging response, the terminal has uplink data to be transmitted, information indicating that the terminal receives downlink data, information indicating that the terminal initiates a high priority signaling, information indicating that the terminal initiates a low priority signaling, information indicating that the terminal initiates a conversation call, information indicating that the terminal initiates a stream service call, information indicating that the terminal initiates an interaction type service, information indicating that the terminal initiates an emergency call, information indicating that the terminal initiates a multimedia broadcast multicast service (MBMS) reception, the terminal initiates an MBMS point-to-point bearer setup request, information indicating that the terminal initiates a circuit switch domain connection setup, information indicating that the terminal initiates a packet switch domain connection setup, information indicating that the terminal initiates a speech call, and information indicating that the terminal initiates a video call.

10. The method according to claim 1 or 2, **characterized in that** the reconfiguration message comprises one or more of a radio bearer setup message, a radio bearer reconfiguration message, a transport channel setup message, a transport channel reconfiguration message, and a physical channel reconfiguration message.

11. A reconfiguration method, **characterized in** comprising:
sending a measurement report message triggered based on state transition to a radio network controller (RNC), wherein the measurement report message carries indication information for triggering radio resource control (RRC) state transition; and
receiving a reconfiguration message sent from the RNC, wherein the reconfiguration message comprises: a target state of the RRC state transition designated for a terminal, and/or corresponding radio bearer information and/or transport channel information and/or physical channel information when the terminal is in the RRC target state.

12. The method according to claim 11, **characterized in that** the sending the measurement report message triggered based on the state transition to the RNC specifically comprises:
sending, by the terminal in a cell paging channel (CELL_PCH) state, the measurement report message having a measurement identity 16 to the RNC.

13. The method according to claim 11 or 12, **characterized in that** the indication information for triggering the RRC state transition comprises at least one radio bearer identity (RB ID), or comprises at least one radio bearer identity (RB ID) and data volume information.

14. The method according to claim 13, **characterized in that** before the sending the measurement report message triggered based on the state transition to the RNC, the method further comprising:
receiving control information sent from the RNC, wherein the control information indicates the terminal to report service information corresponding to data in the current RLC cache.

15. The method according to claim 14, **characterized in that** the service information comprises an RB ID corresponding to at least one service to which the data in the current RLC cache of the terminal belongs, or comprises an RB ID and a data volume of corresponding service in the current RLC cache;
or, the service information comprises RB IDs corresponding to all services set up by the terminal at a network side, or comprises RB IDs and data volumes of corresponding services in the current RLC cache;
or, the service information comprises at least one set RB ID, or comprises an RB ID and a data volume of corresponding service in the current RLC cache.

16. The method according to claim 14 or 15, **characterized in that** the control information is carried in one or more of a measurement control message, an RB setup message, an RB reconfiguration message, a transport channel setup message, a transport channel reconfiguration message and a physical channel reconfiguration message.

17. The method according to claim 11 or 12, **characterized in that** the indication information for triggering the RRC state transition comprises a cause for triggering the terminal to initiate a measurement report and/or service type information currently to be initiated by the terminal.

18. The method according to claim 17, **characterized in that** the indication information for triggering the RRC state transition comprises one or more of the following information: the terminal initiates a call, the terminal initiates a paging response, the terminal has uplink data to be transmitted, information indicating that the terminal receives downlink data, information indicating that the terminal initiates a high priority signaling, information indicating that the terminal initiates a low priority signaling, information indicating that the terminal initiates a conversation call, information indicating that the terminal initiates a stream service call, information indicating that the terminal initiates an interaction type service, information indicating that the terminal initiates an emergency call, information indicating that the terminal initiates a Multimedia Broadcast Multicast Service (MBMS) reception, the terminal initiates an MBMS point-to-point bearer setup request, information indicating that the terminal initiates a circuit switch domain connection setup, information indicating that the terminal initiates a packet switch domain connection setup, information indicating that the terminal initiates a speech call, and information indicating that the terminal initiates a video call.

19. The method according to claim 11 or 12, **characterized in that** the reconfiguration message comprises one or more of a radio bearer setup message, a radio bearer reconfiguration message, a transport channel setup message, a transport channel reconfiguration message, and a physical channel reconfiguration message.

20. A radio network controller (RNC), **characterized in** comprising:
a receiving module configured to receive a measurement report message triggered based on state transition and sent from a terminal, wherein the measurement report message carries indication information for triggering Radio Resource Control (RRC) state transition; and
a reconfiguration module configured to send a reconfiguration message to the terminal, wherein the reconfiguration message comprises: a target state of the RRC state transition designated for the terminal and/or corresponding radio bearer information and/or transport channel information and/or physical channel information when the terminal is in the RRC target state.

21. The RNC according to claim 20, **characterized in that** the receiving module is specifically configured to receive the measurement report message having a measurement identity 16 sent from the terminal in a cell paging channel (CELL_PCH) state.

22. The RNC according to claim 20 or 21, **characterized in that** the indication information for triggering the RRC state transition carried in the measurement report message received by the receiving module comprises at least one Radio Bearer Identity (RB ID), or comprises at least one Radio Bearer Identity (RB ID) and data volume information.

23. The RNC according to claim 22, **characterized in** further comprising:
a sending module configured to send control information to the terminal, wherein the control information indicates the terminal to report service information corresponding to data in the current RLC cache.

24. The RNC according to claim 23, **characterized in that** the service information comprises an RB ID corresponding to at least one service to which the data in the current RLC cache of the terminal belongs, or comprises an RB ID and a data volume of corresponding service in the current RLC cache;
or, the service information comprises RB IDs corresponding to all services set up by the terminal at a network side, or comprises RB IDs and data volumes of corresponding services in the current RLC cache;
or, the service information comprises at least one set RB ID, or comprises an RB ID and a data volume of corresponding service in the current RLC cache.

25. The RNC according to claim 24, **characterized in that** the at least one RB ID, or the at least one RB ID and the data volume thereof, are represented with bitmap or enumeration value.

26. The RNC according to claim 23 or 24, **characterized in that** the control information sent from the sending module is carried in one or more of a measurement control message, an RB setup message, an RB reconfiguration message, a transport channel setup message, a transport channel reconfiguration message and a physical channel reconfiguration message.

27. The RNC according to claim 20 or 21, **characterized in that** the indication information for triggering the RRC state transition received by the receiving module comprises a cause for triggering the terminal to initiate a measurement report and/or service type information currently to be initiated by the terminal.

28. The RNC according to claim 27, **characterized in that** the indication information for triggering the RRC state transition carried in the measurement report message received by the receiving module comprises one or more of the following information: the terminal initiates a call, the terminal initiates a paging response, the terminal has uplink data to be transmitted, information indicating that the terminal receives downlink data, information indicating that the terminal initiates a high priority signaling, information indicating that the terminal initiates a low priority signaling, information indicating that the terminal initiates a conversation call, information indicating that the terminal initiates a stream service call, information indicating that the terminal initiates an interaction type service, information indicating that the terminal initiates an emergency call, information indicating that the terminal initiates a Multimedia Broadcast Multicast Service (MBMS) reception, the terminal initiates an MBMS point-to-point bearer setup request, information indicating that the terminal initiates a circuit switch domain connection setup, information indicating that the terminal initiates a packet switch domain connection setup, information indicating that the terminal initiates a speech call, and information indicating that the terminal initiates a video call.

29. The RNC according to claim 20 or 21, **characterized in that** the reconfiguration message sent from the reconfiguration module comprises one or more of a radio bearer setup message, a radio bearer reconfiguration message, a transport channel setup message, a transport channel reconfiguration message, and a physical channel reconfiguration message.

30. A terminal, **characterized in** comprising:
a sending module configured to send a measurement report message triggered based on state transition to a radio network controller (RNC), wherein the measurement report message carries indication information for triggering radio resource control (RRC) state transition; and
a receiving module configured to receive a reconfiguration message sent from the RNC, wherein the reconfiguration message comprises: a target state of the RRC state transition designated for the terminal, and/or corresponding radio bearer information and/or transport channel information and/or physical channel information when the terminal is in the RRC target state.

31. The terminal according to claim 30, **characterized in that** the sending module is specifically configured to send the measurement report message having a measurement identity 16 to the RNC.

32. The terminal according to claim 30 or 31, **characterized in that** the indication information for triggering the RRC state transition carried in the measurement report message sent from the sending module to the RNC comprises at least one radio bearer identity (RB ID), or comprises at least one radio bearer identity (RB ID) and data volume information.

33. The terminal according to claim 32, **characterized in that** the receiving module is further configured to receive control information sent from the RNC, wherein the control information indicates the terminal to report service information corresponding to data in the current RLC cache.

34. The terminal according to claim 33, **characterized in that** the service information comprises an RB ID corresponding to at least one service to which the data in the current RLC cache of the terminal belongs, or comprises an RB ID and a data volume of corresponding service in the current RLC cache;
or, the service information comprises RB IDs corresponding to all services set up by the terminal at a network side, or comprises RB IDs and data volumes of corresponding services in the current RLC cache;
or, the service information comprises at least one set RB ID, or comprises an RB ID and a data volume of corresponding service in the current RLC cache.

35. The terminal according to claim 33 or 34, **characterized in that** the control information received by the receiving module is carried in one or more of a measurement control message, an RB setup message, an RB reconfiguration message, a transport channel setup message, a transport channel reconfiguration message and a physical channel reconfiguration message.

36. The terminal according to claim 35, **characterized in that** the indication information for triggering the RRC state transition carried in the measurement report message sent from the sending module to the RNC comprises a cause for triggering the terminal to initiate a measurement report and/or service type information currently to be initiated by the terminal.

37. The terminal according to claim 36, **characterized in that** the indication information for triggering the RRC state transition carried in the measurement report message sent from the sending module to the RNC comprises one or more of the following information: the terminal initiates a call, the terminal initiates a paging response, the terminal has uplink data to be transmitted, information indicating that the terminal receives downlink data, information indicating that the terminal initiates a high priority signaling, information indicating that the terminal initiates a low priority signaling, information indicating that the terminal initiates a conversation call, information indicating that the terminal initiates a stream service call, information indicating that the terminal initiates an interaction type service, information indicating that the terminal initiates an emergency call, information indicating that the terminal initiates a Multimedia Broadcast Multicast Service (MBMS) reception, the terminal initiates an MBMS point-to-point bearer setup request, information indicating that the terminal initiates a circuit switch domain connection setup, information indicating that the terminal initiates a packet switch domain connection setup, information indicating that the terminal initiates a speech call, and information indicating that the terminal initiates a video call.
